# EUROPÄISCHE PATENTSCHRIFT

(11) **EP 0 575 337 B1**
(45) Veröffentlichungstag und Bekanntmachung des Hinweises auf die Patenterteilung: **30.11.1994**
(21) Anmeldenummer: 92902757.1
(22) Anmeldetag: 18.01.1992
(51) Int. Cl.: C07F 3/02

(54) **VERFAHREN ZUR HERSTELLUNG VON ALKOXYMAGNESIUMHALOGENIDEN**
PROCESS FOR PRODUCING ALKOXYMAGNESIUM HALOGENIDES
PROCEDE DE PREPARATION D'HALOGENURES D'ALCOXYMAGNESIUM

(30) Priorität: 14.03.1991 DE 4108204
(43) Veröffentlichungstag der Anmeldung: 29.12.1993
(73) Patentinhaber: Witco GmbH, 59180 Bergkamen (DE)
(72) Erfinder: GÜRTZGEN, Stefan, D-5600 Wuppertal 21 (DE)
(86) Internationale Anmeldenummer: EP9200097
(87) Internationale Veröffentlichungsnummer: WO9216533

(56) Entgegenhaltungen:
- EP-A- 0 242 801
- US-A- 4 238 354
- US-A- 4 370 257

## Beschreibung

Gegenstand der vorliegenden Erfindung ist ein einfaches Verfahren zur Herstellung von Alkoxymagnesiumhalogeniden in einem Einstufenprozeß durch stöchiometrische Umsetzung von mittels Magnesiumalkylverbindung voraktivierten Magnesiums mit einer äquimolaren Mischung aus Alkylhalogenid und einem Alkanol, bevorzugt einem β-verzweigten Alkanol.

Alkoxymagnesiumchloride der allgemeinen Formel ROMgCl werden unter anderem eingesetzt zur Herstellung trägermodifizierter Ziegler-Natta Katalysatoren für die Polyolefinindustrie, speziell auf Basis von Titan. Sie zeichnen sich gegenüber den herkömmlichen Ziegler-Natta-Systemen insbesondere durch eine höhere Aktivität und höhere Stereospezifität bei der Polymerisation von Olefinen aus.

Als potentielle Edukte zur Herstellung von Verbindungen des Typs ROMgX sind zunächst Grignard-Verbindungen der allgemeinen Formel RMgX in Ether denkbar. Da jedoch die quantitative Entfernung des Ethers, der sich in vielen Polymerisationsprozessen als störend erweist, problematisch ist, erscheint dieser Weg als nicht generell gangbar. In der Literatur sind zahlreiche Verfahren zur Herstellung magnesium- und halogenhaltiger, insbesondere chlorhaltiger Trägermaterialien für Katalysatoren beschrieben. Ein einfacher Zugang zu niedrig schmelzenden und/oder kohlenwasserstofflöslichen Produkten auf metallorganischem Weg wurde jedoch erst in EP-A-0 242 801 aufgezeigt. Beschrieben ist die Umsetzung von Alkylmagnesiumhalogenid aus Magnesium und Alkylhalogenid in wasserfreien Kohlenwasserstoffen mit Sauerstoffverbindungen (Alkohole, Aldehyde, Ketone mit 1 - 20 C-Atomen) unter Inertgasatmosphäre bei Normaldruck und Temperaturen zwischen 40 und 200 °C. Bevorzugt eingesetzt werden Alkohole mit 1 - 18 C-Atomen, wobei die Umsetzung mit β-Alkyl-alkanolen mit 5 - 18 C-Atomen zu in Kohlenwasserstoffen löslichen Produkten führt, wenn man bezogen auf Mg 1,1 - 2,0 Mol Alkanol verwendet. Wesentliches Merkmal dieses Prozesses ist, daß die Reaktion in zwei Stufen durchgeführt wird. Man erzeugt zunächst die Grignardverbindung und setzt in einer 2. Stufe mit der entsprechenden Sauerstoffverbindung um. Vergleichsversuche, in denen die Zudosierung von Alkylhalogenid und Alkanol in einem Einstufenprozeß simultan erfolgte, führten hingegen hauptsächlich zur Bildung von Magnesiumdialkoxyden (EP-A-0 242 801, Vergleichsbeispiele A und B).

Überraschenderweise wurde nun gefunden, daß sich die Synthese von Alkoxymagnesiumhalogeniden in Kohlenwasserstoffen auch als Einstufenprozeß durchführen läßt, wenn das eingesetzte Magnesium mit geringen Mengen (ca. 5 Mol %) an Magnesiumalkyl voraktiviert wird.

Die vorliegende Erfindung betrifft demnach ein Verfahren zur Herstellung von Alkoxymagnesiumhalogeniden der allgemeinen Formel ROMgX, welches dadurch gekennzeichnet ist, daß ein durch geringe Mengen an Magnesiumalkylverbindung voraktiviertes Magnesium stöchiometrisch in einem Einstufenprozess mit einem äquimolaren Gemisch aus Alkylhalogenid R¹X, insbesondere einem Alkylchlorid, und einem Alkanol R²OH in einem inerten Kohlenwasserstoff unter Inertgasatmosphäre umgesetzt wird, wobei R¹ ein linearer, verzweigter oder cyclischer Kohlenwasserstoffrest mit 1-8 C-Atomen und R² ein linearer, verzweigter oder cyclischer Kohlenwasserstoffrest mit 1-20 C-Atomen ist.

Die Umsetzung mit einer 1 : 1 - Mischung aus Alkylhalogenid, und Alkanol, bevorzugt einem in β-Position verzweigten Alkanol mit 5 - 18 C-Atomen, erfolgt im Temperaturintervall von 50 - 150 °C, bevorzugt bei 80 - 100 °C in inerten Kohlenwasserstoffen. Zugabe von zusätzlich 0,1 - 1,0 Mol Alkanol zu den im Falle der 2-alkylsubstituerten Alkanole anfallenden viskosen Lösungen zur Erniedrigung der Viskosität und zur Erhöhung der Lagerstabilität hat sich als zweckmäßig erwiesen (vgl. EP-A-0 242 801). Die in Ausbeuten von ca. 90 % anfallenden Produkte weisen ein Verhältnis RO : Mg : X von annähernd oder gleich 1 : 1 : 1 auf.

Das erfindungsgemäße Verfahren weist eine höhere Raum-Zeit Ausbeute im Vergleich zu dem Zwei-Stufen-Prozeß gemaß EP-A-0 242 801 auf und ermöglicht somit eine wirtschaftlichere Herstellung von Alkoxymagnesiumhalogeniden, insbesondere solchen mit Verzweigung in β-Position. Darüber hinaus wird durch die direkte moderate und kontinuierliche Abreaktion der "in situ" gebildeten Grignardverbindungen eine zu hohe Konzentration an hochreaktiver metallorganischer Verbindung vermieden, wodurch der Prozeß deutlich an Sicherheit gewinnt.

Das erfindungsgemäße Verfahren soll im folgenden anhand einiger Beispiele verdeutlicht werden.

### Allgemeine Methode zur Herstellung von ROMgX:

Die Komponenten I werden unter trockener Stickstoffatmosphäre im Kolben vorgelegt und auf 100 °C erwärmt. Anschließend erfolgt die tropfenweise Zugabe der Reaktionspartner II innerhalb von ca. 45 Minuten. Nach zweistündiger Nachreaktion wird zur Senkung der Viskosität und zur Erhöhung der Lagerstabilität der anfallenden Lösungen vorzugsweise Substanzgemisch III hinzugefügt (ca. 30 Minuten bei 100 °C nachrühren) und anschließend filtriert.

Gesamtreaktionsdauer: ca. 3 Stunden

### Beispiel 1: Herstellung von 2-Ethylhexoxymagnesiumchlorid

- I:: 6,25 g (0,257 Mol) Magnesiumpulver (Typ BOMAG)
10,77 g (= 0,013 Mol Mg) BOMAG-A (Butyloctylmagnesium, 20 % in Heptan)
0,55 g Tributylaluminium
35,00 g Heptan
- II:: 17,85 g (0,193 Mol) Butylchlorid
9,55 g (0,064 Mol) Octylchlorid
35,20 g (0,270 Mol) 2-Ethylhexanol
112,00 g Heptan
- III:: 35,20 g (0,270 Mol) 2-Ethylhexanol
190,00 g Heptan

| Ausbeute: 420 g Filtrat | |
|---|---|
| Mg | 1,46 % (93 % d. Th.) |
| Cl | 2,02 % |
| alkal. Mg | 0,73 % |
| RO : Mg : Cl | 1 : 1 : 0,95 |

### Beispiel 2: Herstellung von 2-Hexyldecoxymagnesiumchlorid

- I:: 6,25 g (0,257 Mol) Magnesiumpulver
10,00 g (= 0,012 Mol Mg) BOMAG-A
0,51 g Tributylaluminium
- II:: 17,85 g (0,193 Mol) Butylchlorid
9,55 g (0,064 Mol) Octylchlorid
65,40 g (0,270 Mol) 2-Hexyldecanol
112,00 g Heptan
- III:: 65,40 g (0,270 Mol) 2-Hexyldecanol
176,00 g Heptan

| Ausbeute: 445 g Filtrat | |
|---|---|
| Mg | 1,36 % (92 % d. Th.) |
| Cl | 2,03 % |
| alkal. Mg | 0,64 % |
| RO : Mg : Cl | 0,94 : 1 : 1 |

## Patentansprüche

1. Verfahren zur Herstellung von Alkoxymagnesiumhalogeniden der allgemeinen Formel ROMgX, dadurch gekennzeichnet, daß ein durch geringe Mengen an Magnesiumalkylverbindung voraktiviertes Magnesium stöchiometrisch in einem Ein-stufenprozess mit einem äquimolaren Gemisch aus Alkyl-halogenid R¹X, insbesondere einem Alkylchlorid, und einem Alkanol R²OH in einem inerten Kohlenwasserstoff unter Inertgasatmosphäre umgesetzt wird, wobei R¹ ein linearer, verzweigter oder cyclischer Kohlenwasserstoffrest mit 1-8 C-Atomen und R² ein linearer, verzweigter oder cyclischer Kohlenwasserstoffrest mit 1-20 C-Atomen ist.

2. Verfahren gemäß Anspruch 1, dadurch gekennzeichnet, daß das eingesetzte Magnesium mit 5 Mol % Magnesiumalkyl voraktiviert wird.

3. Verfahren gemäß Anspruch 1 und 2, dadurch gekennzeichnet, daß als Alkanol ein β-verzweigter Alkohol, insbesondere mit 5 bis 18 C-Atomen, eingesetzt wird.

4. Verfahren gemäß Anspruch 1 bis 3, dadurch gekennzeichnet, daß man die Umsetzung bei 50 - 150 °C, insbesondere 80 - 100 °C durchführt.

5. Verfahren gemäß Anspruch 3 und 4, dadurch gekennzeichnet, daß der β-verzweigte Alkohol am Ende der Reaktion zur Senkung der Viskosität in einem Überschuß von 0,1 - 1,0 Mol eingesetzt wird.

## Claims

1. Process for the preparation of alkoxymagnesium halides of the general formula ROMgx, characterised in that magnesium pre-activated with small amounts of an alkylmagnesium compound is reacted stoichiometrically in a one-step process with an equimolar mixture of an alkyl halide R¹X, especially an alkyl chloride, and an alkanol R²OH in an inert hydrocarbon under an inert gas atmosphere, R¹ representing a linear, branched or cyclic hydrocarbon radical having from 1 to 8 carbon atoms and R² representing a linear, branched or cyclic hydrocarbon radical having from 1 to 20 carbon atoms.

2. Process according to claim 1, characterised in that the magnesium used is pre-activated with 5 mol % of alkylmagnesium.

3. Process according to claims 1 and 2, characterised in that a β-branched alcohol, especially one having from 5 to 18 carbon atoms, is used as the alkanol.

4. Process according to claims 1 to 3, characterised in that the reaction is carried out at from 50 to 150°C, especially from 80 to 100°C.

5. Process according to claims 3 and 4, characterised in that the β-branched alcohol is added at the end of the reaction in an excess of from 0.1 to 1.0 mol in order to reduce the viscosity.

## Revendications

1. Procédé de préparation d'halogénures d'alcoxymagnésiums de formule générale ROMgX, procédé caractérisé en ce que l'on fait réagir dans des proportions stoechiométriques, en une seule opération, du magnésium préactivé par de faibles proportions d'un magnésium-alkyle avec un mélange équimolaire d'un halogénure d'alkyle R¹X, en particulier d'un chlorure d'alkyle, et d'un alcanol R²OH, dans un hydrocarbure inerte sous une atmosphère de gaz inerte, R¹ désignant un radical hydrocarboné linéaire, ramifié ou cyclique ayant de 1 à 8 atomes de carbone et R² un radical hydrocarboné linéaire, ramifié ou cyclique ayant de 1 à 20 atomes de carbone.

2. Procédé selon la revendication 1, caractérisé en ce que le magnésium employé a été préalablement activé avec 5 mol% du magnésium-alkyle.

3. Procédé selon la revendication 1 ou 2, caractérisé en ce que l'alcanol est un alcool ramifié à la position β, ayant en particulier de 5 à 18 atomes de carbone.

4. Procédé selon les revendications 1 à 3, caractérisé en ce que l'on effectue la réaction entre 50 et 150°C, notamment entre 80 et 100°C.

5. Procédé selon les revendications 3 et 4, caractérisé en ce que à la fin de la réaction on ajoute un excès de 0,1 à 1,0 mol de l'alcool β-ramifié pour abaisser la viscosité de la solution formée.
